Europäisches Patentamt

European Patent Office

Office européen des brevets

(19)

(11) Numéro de publication : **0 368 725 B1**

(12) **FASCICULE DE BREVET EUROPEEN**

(45) Date de publication du fascicule du brevet :
**02.09.92 Bulletin 92/36**

(51) Int. Cl.⁵ : **F02K 1/70**

(21) Numéro de dépôt : **89403015.4**

(22) Date de dépôt : **02.11.89**

(54) Inverseur de poussée de turboréacteur muni de portes à minituyère de déviation du flux inverse.

(30) Priorité : **09.11.88 FR 8814606**

(43) Date de publication de la demande :
**16.05.90 Bulletin 90/20**

(45) Mention de la délivrance du brevet :
**02.09.92 Bulletin 92/36**

(84) Etats contractants désignés :
**BE DE ES FR GB IT SE**

(56) Documents cités :
**EP-A- 0 301 955**
**GB-A- 638 063**
**US-A- 3 601 992**

(73) Titulaire : **HISPANO-SUIZA Société anonyme dite:**
**333, Bureaux de la Colline**
**F-92213 Saint Cloud (FR)**
(84) **BE DE ES FR GB IT SE**
Titulaire : **SOCIETE DE CONSTRUCTION DES AVIONS HUREL DUBOIS**
**13 à 21, avenue du Maréchal Juin**
**F-92360 Meudon la Foret (FR)**
(84) **DE FR GB IT**

(72) Inventeur : **Hogie, Jean Paul René André**
**71, boulevard de Strasbourg**
**F-76600 Le Havre (FR)**
Inventeur : **Standish, Robert**
**32, Route du Gâteau**
**F-78120 Gazeran Rambouillet (FR)**
Inventeur : **Vauchel, Guy Bernard**
**316, Rue Pierre Mendes France**
**F-76610 Le Havre (FR)**

(74) Mandataire : **Moinat, François et al**
**S.N.E.C.M.A. Service des Brevets Boîte Postale 81**
**F-91003 Evry Cédex (FR)**

**Description**

La présente invention concerne un inverseur de poussée de turboréacteur à double flux.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

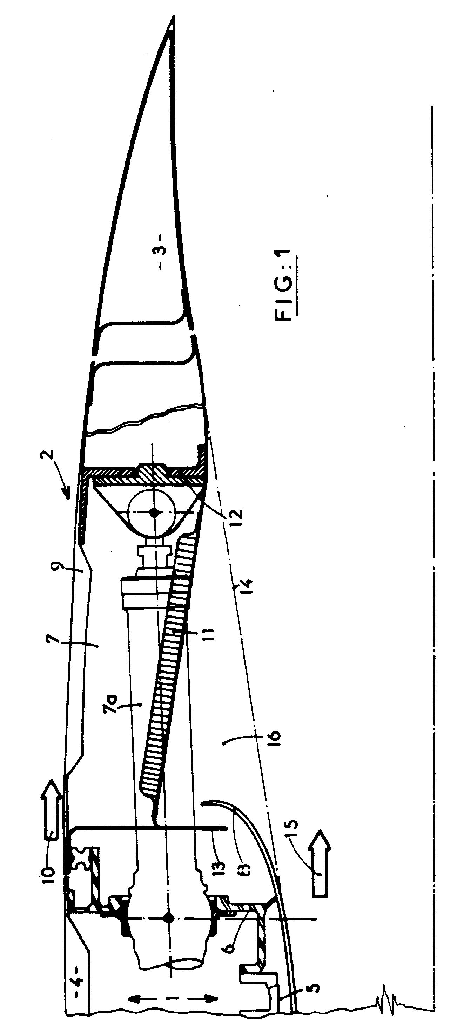

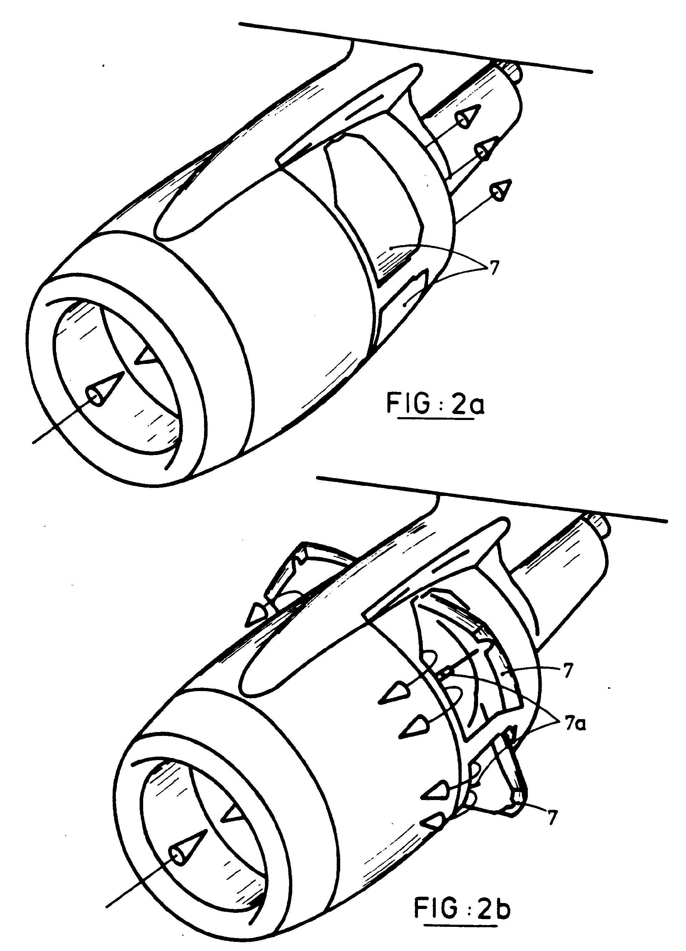

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et une virole arrière fixe 3. Ladite partie fixe amont 1 comprend un panneau externe 4 de nacelle, un panneau interne 5 limitant extérieurement la veine du flux secondaire et un cadre avant 6 qui assure la jonction desdits panneaux 4 et 5. Ledit cadre avant 6 sert également de support au dispositif de commande des déplacements de la partie mobile 2 qui est essentiellement composée d'un certain nombre d'éléments déplaçables,ou obstacles communément appelés portes 7, ce nombre pouvant varier en fonction des applications particulières, par exemple deux, trois ou quatre portes 7 formant un ensemble annulaire, éventuellement en coopération avec une partie fixe, selon le mode de montage de l'ensemble de propulsion constitué par le turboréacteur sur l'avion. Les figures 2a et 2b montrent, selon une vue schématique en perspective un exemple d'application d'un tel inverseur de poussée à un turboréacteur à double flux, l'inverseur comportant dans ce cas quatre portes 7 et les figures 2a et 2b montrent lesdites portes 7, respectivement fermées et ouvertes, correspondant à un fonctionnement en poussée directe et en inverseur de poussée. Chaque porte 7 est associée à un moyen de commande des déplacements tels qu'un vérin 7a.

En aval, amont et aval étant définis par rapport au sens normal de circulation des gaz en poussée directe, la partie fixe 1 se termine par un bord de déviation 8, fixé sous le cadre avant 6 et destiné à assurer une orientation adéquate de l'écoulement, en position d'inversion de poussée. Chaque porte 7 est composée d'un panneau externe 9 venant se placer en position jet direct dans le prolongement du panneau externe 4 de la partie fixe amont 1 pour constituer la paroi aérodynamique continue limitant le flux extérieur au moteur représenté par la flèche 10, d'un panneau interne 11 et d'une structure intérieure 12, assurant la liaison entre les panneaux 9 et 11. La porte 7 est complétée par un ensemble de déflecteurs destinés à canaliser l'écoulement inversé lorsque l'inverseur se trouve en position d'inversion de poussée et la porte 7 en position ouverte ou déployée. Cet ensemble comporte notamment en amont de la porte 7 un déflecteur 13 constitué d'une partie frontale associée ou non à des parties latérales. Afin que la porte 7, en position ouverte d'inversion de poussée, assure des performances suffisantes, il est habituellement nécessaire, comme dans l'exemple connu représenté à la figure 1, que la partie avant du panneau interne 11 s'écarte, dans une direction radiale extérieure, d'une surface théorique représentée par la ligne 14, correspondant à une enveloppe théorique de délimitation aérodynamique continue parfaite de la veine du flux secondaire des gaz, représenté par la flèche 15. Une cavité 16 se trouve ainsi formée du côté intérieur de la porte 7 lorsqu'elle se trouve en position fermée correspondant à la poussée directe, délimitée, à l'avant, par le déflecteur 13 de porte et par le bord de déviation 8 de la partie fixe amont 1, du côté externe, par la partie avant du panneau interne 11 de porte et du côté radialement interne, par ladite surface théorique 14. Une partie du flux est forcée par le bord de déviation 8 dans ladite cavité 16, créant ainsi une distorsion du flux et des perturbations dans les écoulements. Il en résulte des pertes aérodynamiques qui sont néfastes au fonctionnement en poussée directe.

D'autres exemples de réalisations du type d'inverseur de poussée de turboréacteur à portes basculantes sont décrits notamment par FR-A- 2 486 153, FR-A- 2 506 843 et FR-A 2 559 838. Aucune solution pleinement satisfaisante n'a toutefois été proposée pour une amélioration du profil de veine correspondant à une enveloppe aérodynamique de veine correcte en fonctionnement de poussée directe. Notamment une solution tendant à réduire le volume de la cavité 16 décrite ci-dessus en référence à la figure 1 en rapprochant la face interne de la partie avant du panneau interne 11 de la porte 7 de la ligne théorique 14 au moyen d'une réduction de la longueur du déflecteur 13 de porte a pour conséquence de réduire l'efficacité lors du fonctionnement en inversion de poussée, ce qui peut devenir inacceptable. Une autre solution, décrite par FR A 2618853 publiée le 29.07.87, propose d'annuler, ou tout au moins de réduire considérablement, la cavité 16 tout en conservant, en position d'inversion de poussée, un déflecteur 13 de longueur suffisante pour obtenir les performances requises. La mise en oeuvre d'une telle solution doit cependant conduire à des aménagements relativement complexes et impose des mises au point sur un ensemble mobile devant remplir plusieurs fonctions déterminées qui est la porte d'inverseur.

On connaît également par US-A-3 601 992 un inverseur de poussée dans lequel chaque porte comporte un panneau externe et au moins un panneau interne reliés par biellette, un passage étant formé en position d'inversion entre les panneaux.

Par suite, le but de l'invention est d'apporter une solution à ces problèmes en conciliant les facilités de mise en oeuvre, tenant compte des impératifs de masse minimale et de coût réduit, avec l'obtention des performances requises, aussi bien lors du fonctionnement en poussée directe, sans pertes aérodynamiques, que lors du fonctionnement en inversion de poussée, notamment en assurant en poussée directe, une ligne interne de nacelle la plus proche possible du profil théorique optimal de délimitation de veine et en inversion de poussée, une section maximale d'éjection.

Ces buts sont atteints, conformément à l'invention, par un inverseur de poussée du type précité à portes basculantes susceptibles de dévier le flux secondaire d'un turboréacteur à double flux caractérisé en ce que la surface interne du panneau interne de porte se confond avec la surface aérodynamiquement optimale de délimitation de la veine d'écoulement du flux en position de porte fermée correspondant au fonctionnement en poussée directe et en ce que, entre ledit panneau interne et le panneau externe de porte est ménagé au moins un passage de géométrie constante présentant une ouverture à chacune de ses extrémités, du côté interne de ladite porte et formant une mini-tuyère d'écoulement de manière à accroître, lors du fonctionnement en inversion de poussée, la section d'éjection du flux inversé dont une partie s'écoule à travers ladite mini-tuyère.

Avantageusement, chaque mini-tuyère de porte peut être équipée de déflecteurs disposés de manière à optimiser la direction du flux inversé. En outre, les entrées desdites mini-tuyères peuvent avantageusement être associées à au moins un volet mobile susceptible d'obturer ladite entrée en position de poussée directe et de la dégager lors du passage en inversion de poussée.

D'autres caractéristiques et avantages de l'invention seront mieux compris à la lecture de la description qui va suivre des modes de réalisation de l'invention, en référence aux dessins annexés sur lesquels :

– la figure 1 représente une demi-vue schématique, en coupe longitudinale par un plan passant par l'axe de rotation d'un turboréacteur, d'un inverseur de poussée à portes basculantes, en position fermée, d'un type connu et qui a fait précédemment l'objet d'une description ;
– les figures 2a et 2b représentent deux vues schématiques en perspective de l'inverseur de poussée représenté à la figure 1, monté sur un turboréacteur et montré respectivement en position fermée et en position déployée ;
– la figure 3 représente une demi-vue schématique en coupe longitudinale par un plan passant par l'axe de rotation du turboréacteur et par l'axe de la porte, d'un inverseur de poussée suivant un mode de réalisation conforme à l'invention, dans une position correspondant à un fonctionnement en poussée directe, la porte étant fermée ;
– la figure 4 représente une vue analogue à celle de la figure 3 montrant l'inverseur de poussée dans une position correspondant à un fonctionnement en inversion de poussée, la porte étant ouverte ;
– la figure 5 représente l'inverseur de poussée représenté sur les figures 3 et 4, selon une vue analogue à celle des figures 3 et 4, dans la position de la figure 3 et suivant un plan de coupe différent ;
– la figure 6 représente l'inverseur de poussée représenté sur les figures 3, 4 et 5 selon une vue analogue à celle des figures 3, 4 et 5, dans la position de la figure 4 et suivant un plan de coupe différent ;
– la figure 7 représente, selon une vue analogue à celle de la figure 3, et dans une position identique, un inverseur de poussée suivant une variante de réalisation de l'invention ;
– la figure 8 représente, selon une vue analogue à celle de la figure 4 et dans une position identique, l'inverseur de poussée représenté à la figure 7 ;
– la figure 9 représente, selon une vue analogue à celle de la figure 5 et dans une position identique, l'inverseur de poussée représenté aux figures 7 et 8 ;
– la figure 10 représente, selon une vue analogue à celle de la figure 6 et dans une position identique, l'inverseur de poussée représenté aux figures 7, 8 et 9.
– la figure 11 représente, selon une vue en coupe transversale suivant la ligne XI-XI de la figure 7, une porte de l'inverseur de poussée représenté aux figures 7 à 10;
– la figure 12 représente une vue suivant la flèche XII des figures 3 ou 7 d'une porte de l'inverseur de poussée conforme à l'invention.

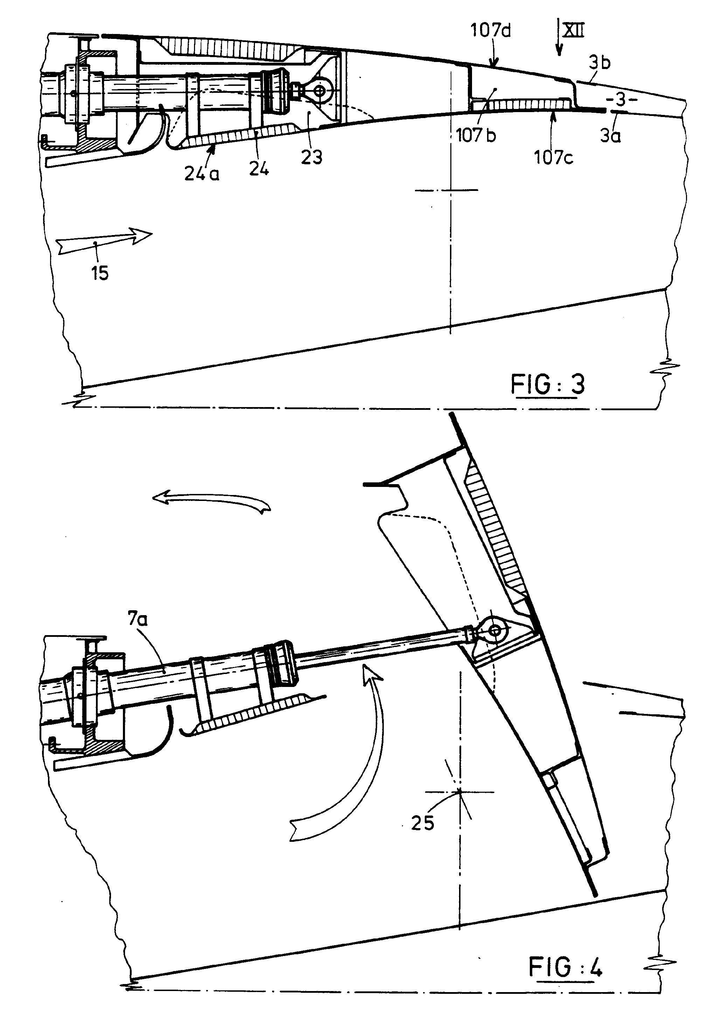

L'inverseur de poussée de turboréacteur à double flux représenté sur les figures 3 à 6, dans un mode de réalisation conforme à l'invention, comporte les ensembles principaux et éléments qui ont été précédemment décrits pour un exemple connu d'inverseur de poussée, en référence aux figures 1, 2a et 2b et on conservera pour des éléments identiques ou correspondants les mêmes références de désignation, les éléments propres au présent mode de réalisation de l'invention étant affectés d'une référence augmentée d'une centaine. L'inverseur de poussée comporte ainsi notamment la partie fixe amont 1 composée du panneau externe 4 de nacelle, du panneau interne 5 délimitant extérieurement la veine du flux secondaire représenté par la flèche 15, panneau 5 qui est prolongé vers l'aval par le bord de déviation 8. Lesdits panneaux 4 et 5 sont supportés par un cadre avant 6 qui sert également de support pour le vérin 7a de commande des déplacements de la porte 107.

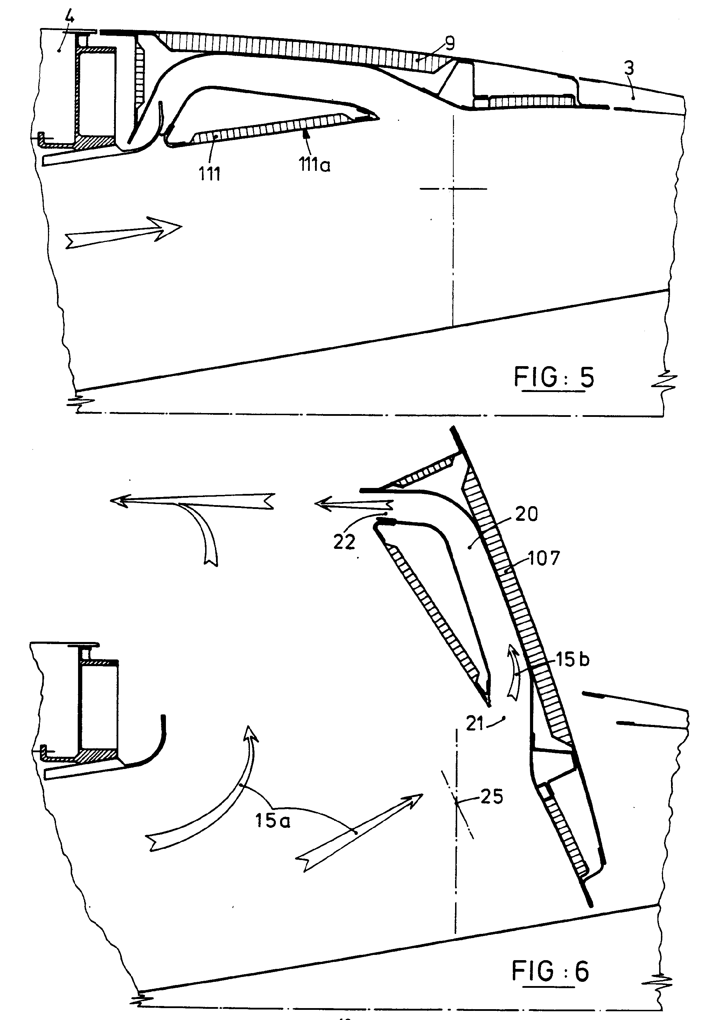

De manière classique et comme dans l'exemple connu représenté a la figure 1, la porte 107 d'inverseur de poussée comporte une partie arrière 107b dont les profils respectivement interne et externe 107c et 107d sont dans le prolongement des surfaces respectivement interne et externe 3a et 3b de la partie arrière fixe 3 de l'inverseur, un panneau externe 9 et à l'avant un ensemble formant déflecteur 13. Par contre et de manière remarquable et conforme à l'invention, la porte 107 ne comporte pas de cavité telle que la cavité 16 précédemment décrite en référence à la figure 1. Au contraire, le panneau interne 111 de porte s'écarte vers l'avant du panneau externe 9 pour venir confondre sa surface interne 111a avec la surface aérodynamique théorique de délimitation de la veine du flux secondaire circulant dans le canal secondaire du turboréacteur, comme cela est visible sur la figure 5, notamment. En outre et de manière également remarquable et conforme à l'invention, à l'intérieur de la porte 107, entre ladite partie arrière 107b et le déflecteur 13 et entre les panneaux interne 111 et externe 9, est ménagé un passage 20 présentant du côté interne de la porte et à l'arrière, une ouverture 21 et de même, du côté interne de la porte mais à l'avant, une ouverture 22. Comme il sera expliqué plus en détails, plus loin, l'ouverture 21 constitue une entrée, l'ouverture 22, une sortie et entre entrée et sortie, le passage 20 présente une évolution des sections de manière à constituer une mini-tuyère de circulation d'un écoulement d'air. En effet, la porte 107 d'inverseur, lors d'un fonctionnement en poussée directe, la porte étant fermée, comme représenté sur les figures 3 et 5, assure ainsi une surface aérodynamiquement optimale de délimitation externe de la veine de circulation du flux secondaire grâce à la surface interne 111a du panneau interne 111 de porte. Entre les panneaux interne 111 et externe 9 de porte qui sont solidairement fixes l'un par rapport à l'autre, ledit passage 20 conserve une géométrie constante, quelle que soit la position de la porte 107 d'inverseur. Comme représenté sur la figure 3 et comme cela a déjà été décrit dans la demande de brevet français numéro 87.13490 déposée par la Demanderesse le 30 septembre 1987, le vérin 7a de commande des déplacements de la porte 107 est placé, lors de la fermeture de la porte, dans un tunnel formant logement 23 qui est masqué par une plaque d'obturation 24, solidaire du corps du vérin, de manière à éviter toute perturbation des écoulements dans la position correspondant au fonctionnement en poussée directe pour laquelle la surface interne 2a de ladite plaque 24 se raccorde parfaitement à la surface interne 111a du panneau interne 111 de porte et se confond comme elle avec la surface aérodynamique optimale. Dans ce mode de réalisation de part et d'autre du tunnel 23 de vérin, la porte 107 comporte deux passages 20 formant mini-tuyères.

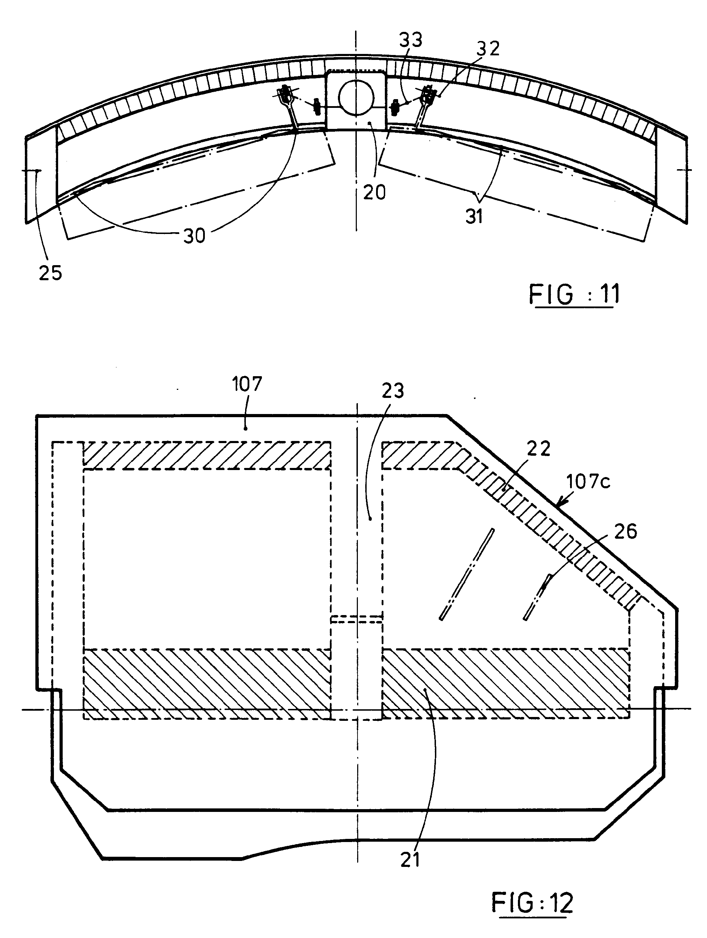

Lors d'un fonctionnement en inversion de poussée, comme représenté sur les figures 4 et 6, sous l'action du vérin 7a, la porte 107 bascule autour de son axe de pivotement 25, bloquant le passage dans le canal secondaire et dégageant une ouverture dans l'enveloppe externe où s'engage le flux inversé représenté par la flèche 15a. Une partie 15b du flux inversé pénètre par les entrées 21 dans les mini-tuyères 20 de porte dont le profil est adapté pour assurer les performances recherchées et notamment, à la sortie 22 des mini-tuyères 20, le flux présente la pression et l'orientation voulues pour rabattre le flux inversé vers l'avant du turboréacteur et assurer les performances d'inversion. Comme indiqué sur la figure 12, la porte 107 présente une épaisseur suffisante pour rabattre efficacement le flux dans la totalité du coin coupé 107c de la porte 107. Un réglage de la direction du flux inversé de manière à optimiser l'interaction aérodynamique avec l'appareil propulsé est en outre obtenu au moyen de déflecteurs 26 qui servent éventuellement de renforts de la mini-tuyère 20.

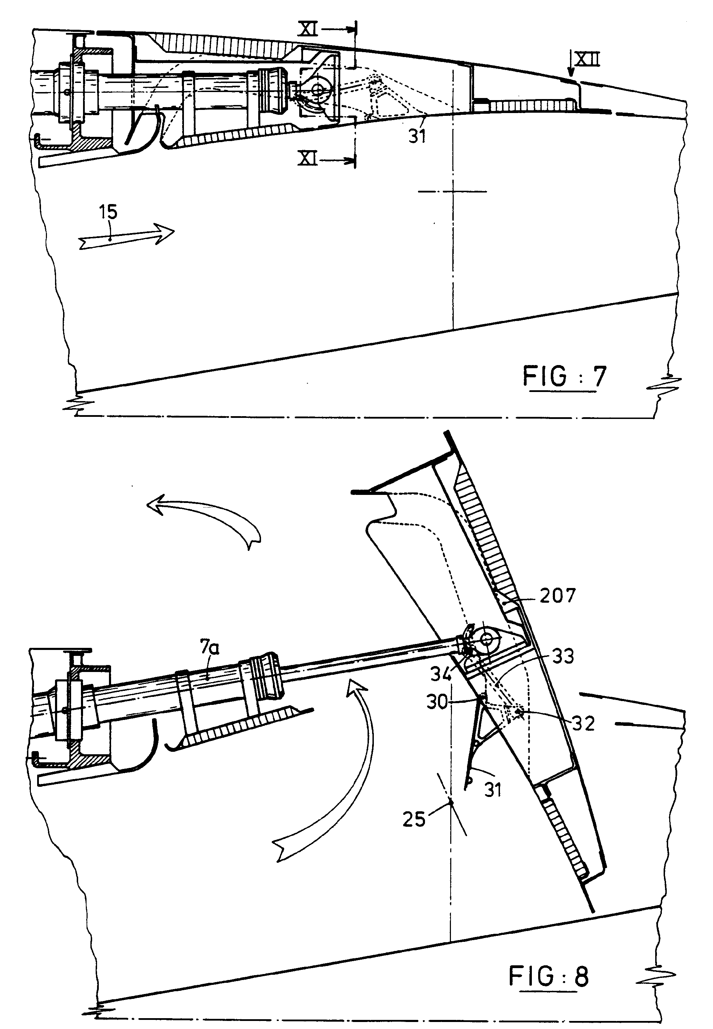

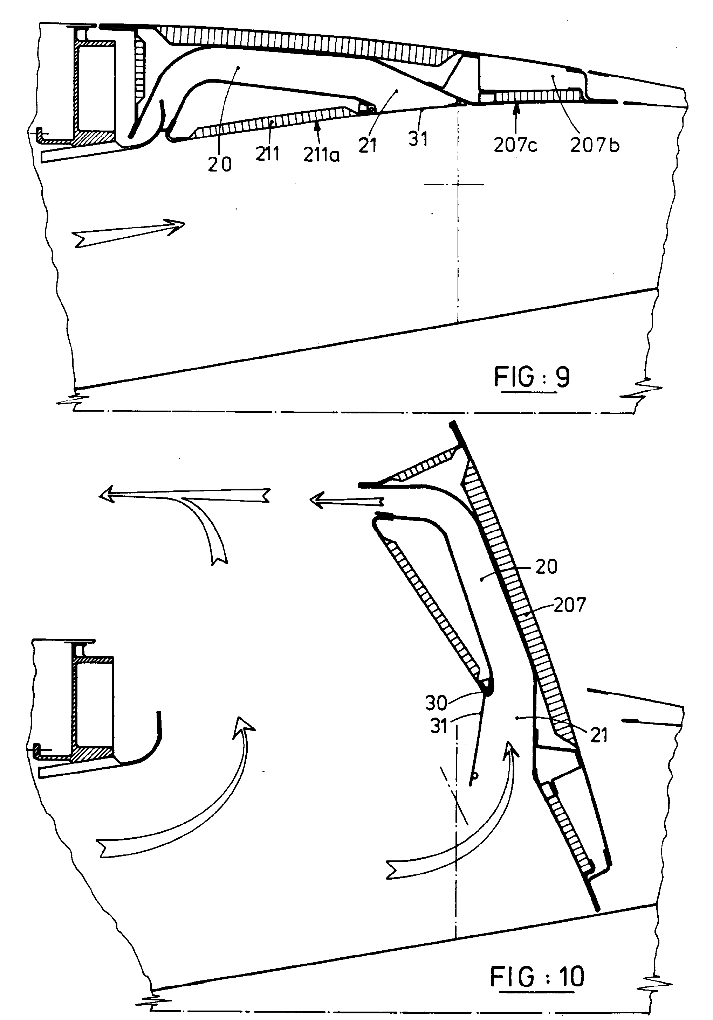

Dans le mode de réalisation qui vient d'être décrit, on obtient, lors du fonctionnement en poussée directe, un écoulement optimisé autour de l'ouverture 21 de la mini-tuyère 20 de la porte 107 par formation d'une paroi fluide à décollement franc. Suivant les applications, il peut cependant s'avérer souhaitable de prévoir une matérialisation de la surface aérodynamique optimale et c'est ce qui est obtenu par la variante de réalisation représentée sur les figures 7 à 11. Comme précédemment, les références de désignation des éléments identiques sont conservées et les éléments modifiés dans la présente variante sont affectés d'une référence augmentée d'une centaine. L'extrémité aval du panneau interne 211 d'une porte 207 de l'inverseur, au bord de l'ouverture 21 de la mini-tuyère 20, porte un pivot 30 qui supporte de manière articulée un volet mobile 31. Lors du fonctionnement en poussée directe, comme représenté sur les figures 7 et 9, le volet mobile 31 s'adapte parfaitement dans l'ouverture 21, obturant ainsi cette entrée 21 de la mini-tuyère 20 de la porte 207 et assurant entre la surface interne 211a du panneau interne 211 de porte et la surface interne 207c de la partie arrière 207b de la porte 207 une continuité de la surface aérodynamique optimale. Comme visible plus en détails sur les figures 8 et 11, le volet mobile 31 porte également un point d'attache 32 sur lequel s'articule une bielle 33 qui relie ledit volet 31 à un point d'entraînement 34 solidaire de l'extrémité de la tige du vérin 7a de commande des déplacements de la porte 207. Ainsi lors du déploiement de l'inverseur de poussée, lorsque sous l'action du vérin 7a, la porte 207 bascule autour de son axe de pivotement 25 pour venir occuper la position ouverte représentée sur les figures 8 et 10, la tige du vérin 7a entraîne l'extrémité 34 de la bielle 33 qui fait pivoter le volet 31 autour de son pivot articulé 30. L'entrée 21 de la mini-tuyère 20 de la porte 207 se trouve ainsi dégagée et comme précédemment décrit en référence aux figures 4 et 6, une partie du flux inversé passe par la mini-tuyère 20 et est contrôlée de manière à assurer les performances optimales d'inversion. La position du volet 31 peut être adaptée pour que ledit volet serve d'écope au flux inversé afin de permettre ainsi un ajustement précis de la partie de ce flux inversé qui est dérivée dans la mini-tuyère 20.

## Revendications

1. Inverseur de poussée de turboréacteur à double flux comportant une partie amont (1) dont la partie radialement interne est prolongée vers l'aval par un bord de déviation (8) et une partie mobile comportant des obstacles de déviation, notamment des portes basculantes (7 ; 107; 207) susceptibles en position fermée de s'intégrer dans la paroi extérieure du canal annulaire du flux secondaire, et, en position déployée, de dévier ledit flux secondaire, chaque porte (7 ; 107 ; 207) étant associée à des moyens de commande des déplacements, tels qu'un vérin (7a), la surface interne (111a ; 211a) du panneau interne (111; 211) de porte (107 ; 207) se confondant avec la surface aérodynamiquement optimale de délimitation de la veine d'écoulement du flux en position de porte fermée correspondant au fonctionnement en poussée directe caractérisé en ce que, entre ledit panneau interne (111) et le panneau externe (9) de porte (107 ; 207) est ménagé au moins un passage (20) de géométrie constante présentant une ouverture (21,22) à chacune de ses extrémités, du côté interne de ladite porte (107 ; 207) et formant une mini-tuyère d'écoulement de manière à accroître, lors du fonctionnement en inversion de poussée, la section d'éjection du flux inversé dont une partie s'écoule à travers ladite mini-tuyère.

2. Inverseur de poussée selon la revendication 1 dans lequel un passage formant mini-tuyère (20) est ménagé sur chaque porte (107 ; 207) de chaque côté du tunnel formant le logement du vérin de commande (7a).

3. Inverseur de poussée selon l'une des revendications 1 ou 2 dans lequel chaque mini-tuyère (20) de porte (107 ; 207) est équipée de déflecteurs (26) disposés de manière à optimiser la direction du flux inversé.

4. Inverseur de poussée selon l'une quelconque des revendications 1 à 3 dans lequel l'ouverture (21) dudit passage (20) formant mini-tuyère de porte (207) située du côté arrière, par rapport au sens normal d'écoulement des gaz de turboréacteur, et constituant l'entrée de la partie de flux inversé est associée à au moins un volet mobile (31) articulé sur un pivot (30) porté par l'extrémité aval du panneau interne (211) de porte et permettant d'obturer ladite entrée (21)dans la position correspondant à la poussée directe et de dégager ladite entrée (21) et de canaliser la partie de flux inversé lors du fonctionnement en inversion de poussée.

5. Inverseur de poussée selon la revendication 4 dans lequel ledit volet mobile (31) est solidaire de moyens de commande comportant une bielle (33) articulée à une extrémité sur ledit volet (31) et, à l'autre extrémité sur la tige du vérin de commande (7a) de la porte (207).

## Patentansprüche

1. Schubumkehrvorrichtung für ein Zweistrom-Strahltriebwerk mit einem stromaufwärtigen Teil (1), dessen radial innerer Teil zur stromabwärtigen Seite hin von einer Umlenkkante (8) und einem beweglichen Teil mit Umlenkhindernissen, insbesondere in Form von schwenkbaren Umkehrklappen (7; 107; 207) verlängert wird, die sich in Schließstellung in die Außenwand des ringförmigen Kanals des Sekundärstroms einfügen und in ausgefahrener Stellung den Sekundärstrom umlenken können, wobei den Umkehrklappen (7; 107; 207) Mittel, z.B. einen Antriebszylinder (7a) für ihre Bewegungssteuerung zugeordnet sind und wobei die Innenflächen (111a, 211a) der inneren Platte (111, 211) der Umkehrklappe (107, 207) in der dem Direktschubbetrieb entsprechenden Schließstellung der Umkehrklappen in die aerodynamisch optimale Begrenzungsfläche der Strömung übergeht, dadurch gekennzeichnet, daß zwischen der genannten inneren Platte (111) und der äußeren Platte (9) der Umkehrklappe (107, 207) wenigstens ein Durchgang (20) mit konstanter Geometrie ausgebildet ist, der an jedem seiner Enden auf der Innenseite der Umkehrklappe (107, 207) eine Öffnung (21, 22) aufweist und eine Strahlleitdüse bildet, derart daß er im Schubumkehrbetrieb den Ausstoßquerschnitt des umgekehrten Strahls vergrößert, von dem ein Teil durch diese Strahlleitdüse strömt.

2.  Schubumkehrvorrichtung nach Anspruch 1, bei der an jeder Umkehrklappe (107, 207) auf jeder Seite eines den Aufnahmeraum für den Antriebszylinder (7a) bildenden Tunnels ein Durchgang ausgebildet ist, der eine Strahlleitdüse (20) bildet.

3.  Schubumkehrvorrichtung nach einem der Ansprüche 1 oder 2, bei der jede Strahlleitdüse (20) der Umkehrklappen (107, 207) mit Deflektoren (26) ausgestattet ist, die so angeordnet sind, daß die Richtung des umgekehrten Strahls optimiert wird.

4.  Schubumkehrvorrichtung nach einem der Ansprüche 1 bis 3, bei der derjenigen Öffnung (21) des die Strahlleitdüse der Umkehrklappe (207) bildenden Durchgangs (20), die in Bezug auf die normale Strömungsrichtung auf der hinteren Seite liegt und die den Eingang für den umgekehrten Teil des Strahls bildet, wenigstens eine bewegbare Verschlußklappe (31) zugeordnet ist, die auf einem von dem stromabwärtigen Endbereich der inneren Platte (211) der Umkehrklappe (207) getragenen Zapfen (30) gelenkig gelagert ist und die in der dem Direktschubbetrieb entsprechenden Position das Verschließen des Eingangs (21) und im Schubumkehrbetrieb die Freigabe des Eingangs (21) und die Kanalisierung des umgekehrten Strahls ermöglicht.

5.  Schubumkehrvorrichtung nach Anspruch 4, bei der die bewegliche Verschlußklappe (31) fest mit Betätigungsmitteln verbunden ist, die eine Triebstange (33) umfassen, die mit einem Ende an der Verschlußklappe (31) und mit dem anderen Ende an der Kolbenstange des Antriebszylinders (7a) der Umkehrklappe (207) angelenkt ist.

**Claims**

1.  Thrust reverser for a double flow turbojet engine comprising an upstream part (1) whose radially internal part is prolonged in the downstream direction by a deflection edge (8) and a moving part comprising deflection obstacles, in particular swinging doors (7; 107; 207) capable, in the closed position, of being integrated within the external wall of the annular secondary flow channel and, in the deployed position, of deflecting the said secondary flow, each door (7; 107; 207) being associated with displacement control means, such as an actuating cylinder (7a), the internal surface (111a; 211a) of the internal panel (111; 211) of a door (107; 207) merging with the aerodynamically optimum surface which delimits the flow channel in the closed door position corresponding to forward thrust operation, characterised in that between the said internal panel (111) and the external panel (9) of a door (107; 207) there is produced at least one passage (20) having constant geometry and having an opening (21, 22) at each of its ends, on the inside of the said door (107; 207) and forming a miniature flow nozzle in such a way as to increase, when operating with thrust reversal, the ejection cross-section of the reversed flow, of which one portion flows through the said miniature nozzle.

2.  Thrust reverser according to Claim 1, in which a passage forming a miniature nozzle (20) is produced on each door (107; 207) on each side of the tunnel forming the housing of the control actuating cylinder (7a).

3.  Thrust reverser according to either of Claims 1 and 2, in which each miniature nozzle (20) of a door (107; 207) is fitted with deflectors (26) disposed in such a way as to optimise the direction of the reversed flow.

4.  Thrust reverser according to any one of Claims 1 to 3, in which the opening (21) of the said passage (20) forming a miniature nozzle of a door (207) situated to the rear side with respect to the normal direction of flow of the turbojet engine gases, and constituting the intake of the portion of reversed flow, is associated with at least one moving flap (31) articulated on a pivot (30) carried by the downstream end of the internal panel (211) of a door and allowing the said intake (21) to be covered in the position corresponding to forward thrust and allowing the said intake (21) to be opened and the portion of reversed flow to be channelled during reverse thrust operation.

5.  Thrust reverser according to Claim 4, in which the said moving flap (31) is integral with control means comprising a connecting rod (33) articulated at one end on the said flap (31) and at the other end on the shaft of the control actuating cylinder (7a) of the door (207).

FIG:1

EP 0 368 725 B1

FIG : 2a

FIG : 2b

FIG : 3

FIG : 4

FIG : 5

FIG : 6

FIG : 7

FIG : 8

FIG : 9

FIG : 10

FIG : 11

FIG : 12